# EUROPÄISCHE PATENTSCHRIFT

(11) **EP 1 078 705 B1**
(45) Veröffentlichungstag und Bekanntmachung des Hinweises auf die Patenterteilung: **26.01.2005**
(21) Anmeldenummer: 00810664.3
(22) Anmeldetag: 26.07.2000
(51) Int. Cl.: B23D 45/26

(54) **Verfahren zum Zerteilen von profilierten Folien**
Method for cutting profiled film sheets
Procédé pour découper des feuilles profilées

(30) Priorität: 25.08.1999 EP 99810761
(43) Veröffentlichungstag der Anmeldung: 28.02.2001
(73) Patentinhaber: Sulzer Chemtech AG, 8404 Winterthur (CH)
(72) Erfinder: Bär, Martin, 8442 Hettlingen (CH)
(74) Vertreter: Sulzer Management AG

(56) Entgegenhaltungen:
- DE-A- 2 415 212
- DE-A- 2 821 884
- US-A- 4 018 118
- US-A- 4 669 348
- US-A- 4 771 667
- US-A- 5 327 805

## Beschreibung

Die Erfindung betrifft ein Verfahren zum Zerteilen von profilierten Folien sowie eine Anlage zum Durchführen des Verfahrens.

Folien mit einer zickzackförmigen Profilierung werden als elementare Bauelemente für geordnete Packungen von Trennkolonnen verwendet, in denen diese Folien in vertikalen Lagen nebeneinander angeordnet sind. Solche profilierten Folien werden beispielsweise mittels eines Plissierverfahrens aus einem planen Metallstreifen hergestellt, wobei sich geradlinige Faltkanten ergeben. Der Metallstreifen ist eine dünne Folie mit einer Dicke, die beispielsweise 0.1 mm beträgt. In der Regel weist diese Folie bereits vor dem Plissieren eine feine Strukturierung in Form einer Rillierung auf. Der plissierte Metallstreifen wird in Stücke zerteilt, deren Längen durch die Einbauverhältnisse in der Trennkolonne gegeben sind. Da die Faltkanten geradlinig sind, ergibt sich bei der Zerteilung eine Trennkante, die ein periodisches Profil aufweist. Dank dieser Tatsache können die Metallstreifen mittels einer Formschere auf beliebige Längen zerschnitten werden.

Während bei einer geordneten Packung, die aus solchen plissierten Folien aufgebaut ist, geradlinige Strömungskanäle - in der Regel in Form einer Kreuzkanalstruktur - vorliegen, sind bei einer abgewandelten Form dieses Packungstyps die Kanäle nicht mehr geradlinig ausgebildet. Dabei sind die Folien der Lagen so profiliert, dass in Randzonen die Kanalkanten gekrümmt sind. Metallstreifen, die mit einer solchen Profilierung versehen sind, lassen sich nicht mehr mittels einer Formschere in beliebig lange Stücke schneiden. Dies ist eine Folge davon, dass das Profil der Trennkante nicht mehr periodisch ist.

Aufgabe der Erfindung ist es, ein zu einer Formschere alternatives Mittel zu schaffen, das ein Zerteilen von profilierten Metallstreifen ermöglicht, für welche die Trennkanten keine periodischen Profile aufweisen. Diese Aufgabe wird durch das im Anspruch 1 definierte Verfahren und die Anlage gemäss Anspruch 7 gelöst.

Das Verfahren zum Zerteilen einer profilierten Folie wird mit einer rotierenden Trennfolie durchgeführt, die eine ebene Fläche mit kreisförmiger Peripherie bildet. Die Trennfolie wird um das Kreiszentrum und in der durch die Fläche aufgespannten Ebene, der Folienebene, rotiert. Unter Ausführen einer Relativbewegung wird die Peripherie mit der profilierten Folie in Kontakt gebracht. Dabei wird durch Abreiben Material abgetragen und ein Trennspalt in der profilierten Folie erzeugt. Es wird Material weitgehend nur von der profilierten Folie abgetragen.

Die Trennfolie kann - verglichen mit den Metallstreifen, aus denen die profilierten Folien hergestellt werden, - relativ dick sein. Sie kann ein dünnes Blech sein, das mehrere Zehntel Millimeter dick ist. Während die profilierte Folie aus einem Kunststoff hergestellt sein kann, ist die Materialwahl bei der Trennfolie aus praktischen Gründen auf Metalle beschränkt. Bei plissierten Kunststofffolien ist die Trennfolie mit Vorteil dünner als die zu zerteilende Folie.

Die abhängigen Ansprüche 2 bis 6 und 8 bis 10 betreffen vorteilhafte Ausführungsformen des erfindungsgemässen Verfahrens bzw. der erfindungsgemässen Anlage.

Nachfolgend wird die Erfindung anhand der Zeichnungen erläutert. Es zeigen:
- Fig. 1: eine von unten gesehen und vereinfacht dargestellte Trennfolie, mit der erfindungsgemäss eine profilierte Folie zerteilt wird,
- Fig. 2: Details zu einer erfindungsgemässen Anlage,
- Fig. 3: eine Illustration zum Abreibprozess beim Zerteilen der profilierten Folie,
- Fig. 4: ausschnittsweise eine Seitenansicht der rotierenden Trennfolie mit einer Darstellung von mitgeführter Luft,
- Fig. 5: eine der Fig. 4 entsprechende Ansicht, mit Blick in Richtung der Rotationsebene, wobei Fig. 4 eine Seitenansicht nach der Linie IV - IV ist, und
- Fig. 6: eine schematisch dargestellte Anlage gemäss der Erfindung.

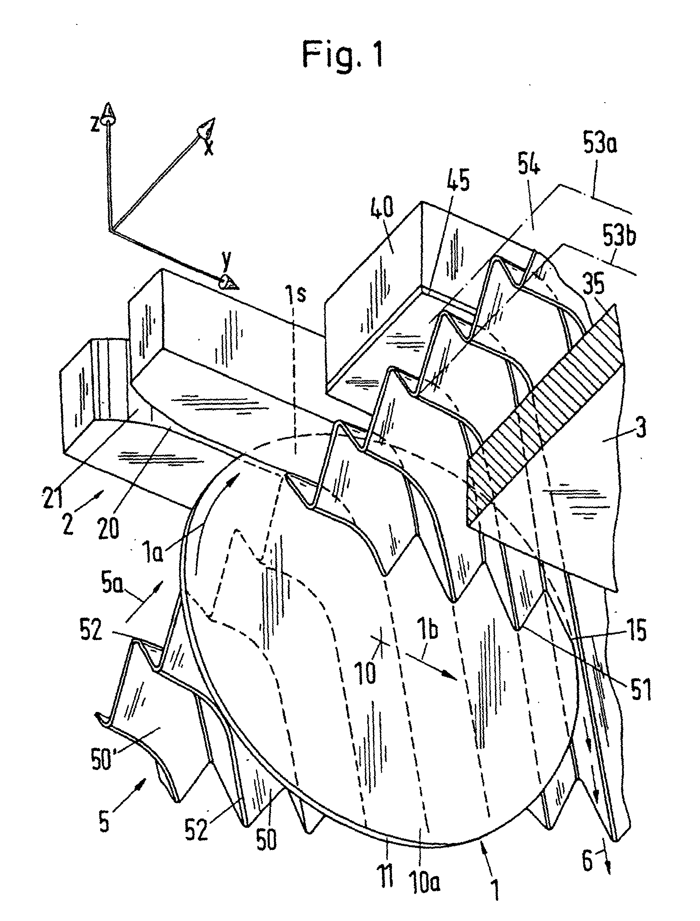

Fig. 1 zeigt die vereinfacht als Kreisscheibe dargestellte Trennfolie 1 mit dem Zentrum 10 und der Peripherie 11. Zur besseren Orientierung sind x-, y- und z-Achsen eines orthogonalen Koordinatensystems angegeben. Die Pfeile 1a und 1b geben eine Rotation der Trennfolie 1 um das Zentrum 10 bzw. eine translatorische Bewegung des Zentrums 10 in Richtung der y-Achse an. Die Folienebene, nämlich die durch die Trennfolie 1 aufgespannte Ebene, ist parallel zur y- und z-Achse. Ein oberes Kreissegment 1s der Trennfolie 1 wird innerhalb eines Spalts 20 einer Einrichtung 2 geführt. Zwischen der Oberseite 35 einer Auflageplatte 3, die nur teilweise dargestellt ist, und der Führungseinrichtung 2 sowie einem Fixierbalken 40 ist eine profilierte Folie 5 eingelegt. Der erfindungsgemässe Zerteilvorgang ist in Fig. 1 zu einem Zeitpunkt dargestellt, zu dem ein Materialabtrag im Punkt 15 erfolgt. Ein bereits hergestellter Trennspalt 51 endet momentan in diesem Punkt 15 an der Peripherie 11 der Trennfolie 1. Ein dort freigesetzter Abrieb, d. h. das abgetragende Material, ist mit Pfeilen 6 angedeutet.

Die profilierte Folie 5 ist für eine Kanäle 50 enthaltende Lage einer Kolonnenpackung vorgesehen. Kantenlinien 52 liegen auf zwei parallelen Flächen 53a und 53b. Die durch die Folie 5 gebildete Lage hat einen Seitenrand 54, der sich in Richtung der x-Achse erstreckt. In einer Randzone am Seitenrand 54 haben die Kanäle 50 gekrümmte Teilstücke 50'. Wegen dieser Formgebung der Randzone ist es nicht möglich, eine Formschere zu verwenden, um die Folie 5 an einer beliebigen Stelle zu zerschneiden.

Nach dem Zerteilen der Folie 5 wird die rotierende Trennfolie 1 in eine Wartestellung ausserhalb der Führungseinrichtung 2 zurückgezogen. Die Einrichtung 2 und der Fixierbalken 40 werden etwas angehoben, so dass das abgetrennte Folienstück entfernt und ein neues Stück der Folie 5 in x-Richtung (Pfeil 5a) nachgeschoben werden kann. Anschliessend wird die Folie 5 wieder mit dem Balken 40 fixiert, der an seiner Unterseite eine gummielastische Schicht 45 trägt. Das sichtbare Ende 21 des Führungspalts 20 ist mit einer sich stetig erweiternden Spaltbreite ausgebildet, so dass dank dieser Formgebung die Trennfolie bei einem weiteren Erzeugen eines Trennspalts 51 berührungslos in den Führungspalt 20 eintreten kann.

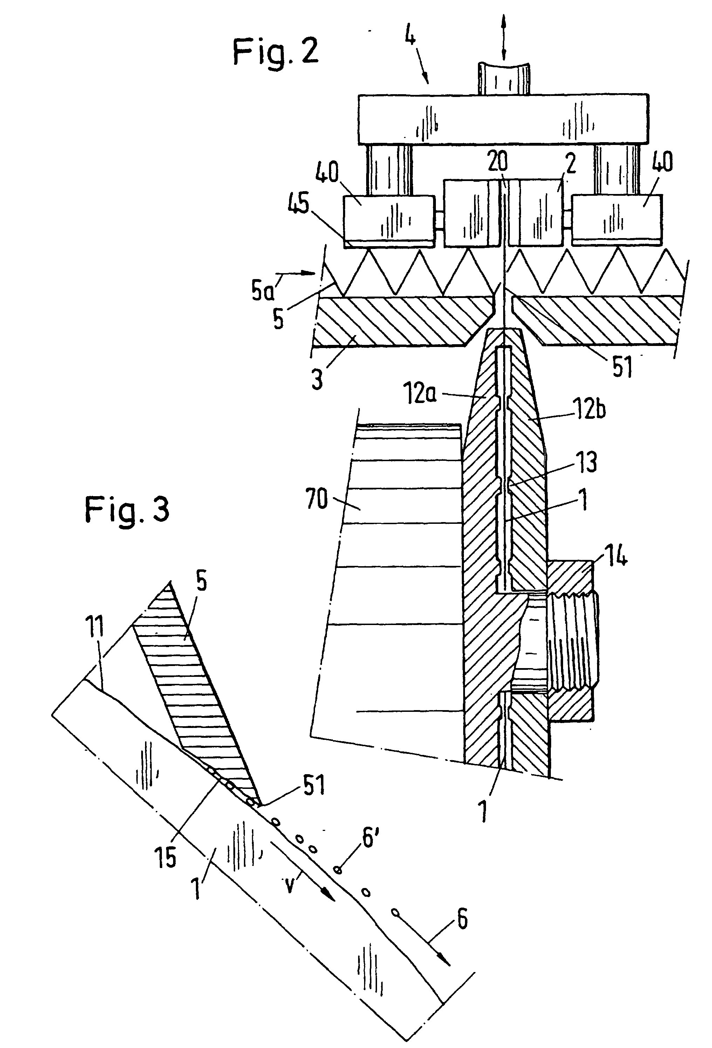

Fig. 2 zeigt einen Teil einer Anlage, mit der das erfindungsgemässe Verfahren durchführbar ist. Die Trennfolie 1 ist lösbar zwischen zwei Einspanntellern 12a und 12b befestigt. Der eine Einspannteller 12a ist mit einer nicht dargestellten Antriebswelle eines Motors 70 fest verbunden; der andere Einspannteller 12b lässt sich zum Auswechseln der Trennfolie 1 durch Lösen eines Schraubrings 14 entfernen. Die Einspannteller 12a und 12b sind elastisch verformbar und tragen an den Klemmflächen ringförmige Erhebungen 13, mit denen sich besonders hohe lokale Klemmkräfte erzeugen lassen. Die Klemmkraft zwischen den beiden Einspanntellern 12a und 12b kann durch zusätzliche, nicht abgebildete Verbindungsschrauben weiter verstärkt werden.

Zwischen der Auflageplatte 3 und einer Klemmeinrichtung 4 ist die in Richtung des Pfeils 5a eingeschobene profilierte Folie 5 fixiert; die rotierende Trennfolie 1 erzeugt in der Folie 5 den Trennspalt 51. Auf und ab bewegbare Teile der Klemmeinrichtung 4 sind zwei Fixierbalken 40 mit weichen Anpressschichten 45 und die Einrichtung 2 mit dem Führungsspalt 20. Der Motor 70 ist mit Vorteil ein Asynchronmotor, der eine Welle bis auf eine Drehzahl von rund 9000 Umdrehungen pro Minute antreiben kann.

Für den Radius der kreisförmigen Trennfolie 1 wird ein Wert zwischen 100 und 500 mm gewählt. Die Rotation der Trennfolie 1 wird empirisch auf die Wahl der Materialien abgestimmt, so dass - siehe Fig. 3 - die Oberflächenpunkte der Peripherie 11 sich mit einer ausreichend hohen Geschwindigkeit v bewegen. Die Temperatur der profilierten Folie 5 steigt an der Abreibstelle 15 auf hohe Werte an, die in der Nähe des Schmelzpunkts, den das Material der Folie 5 hat, liegen können. Bei diesen Verhältnissen werden in dem sich bildenden Trennspalt 51 Partikelchen 6' aus der Kontaktfläche abgeschert und von dieser wegbefördert (Pfeil 6). Bei der ausreichend hohen Geschwindigkeit v entsteht ein scharfkantiger Trennspalt 51, an dessen Flanken praktisch keine Veränderungen - beispielsweise Anlauffarben - feststellbar sind. Die Geschwindigkeit v wird möglichst minimal eingestellt, so dass sich ein minimaler Materialabtrag an der Trennfolie 1 ergibt. Erfahrungsgemäss ist bei einer Trennfolie 1 und einer profilierten Folie 5, die beide metallisch sind und für die die Dicken 0.3 mm bzw. 0.1 mm betragen, die Peripheriegeschwindigkeit v grösser als rund 50 m/s.

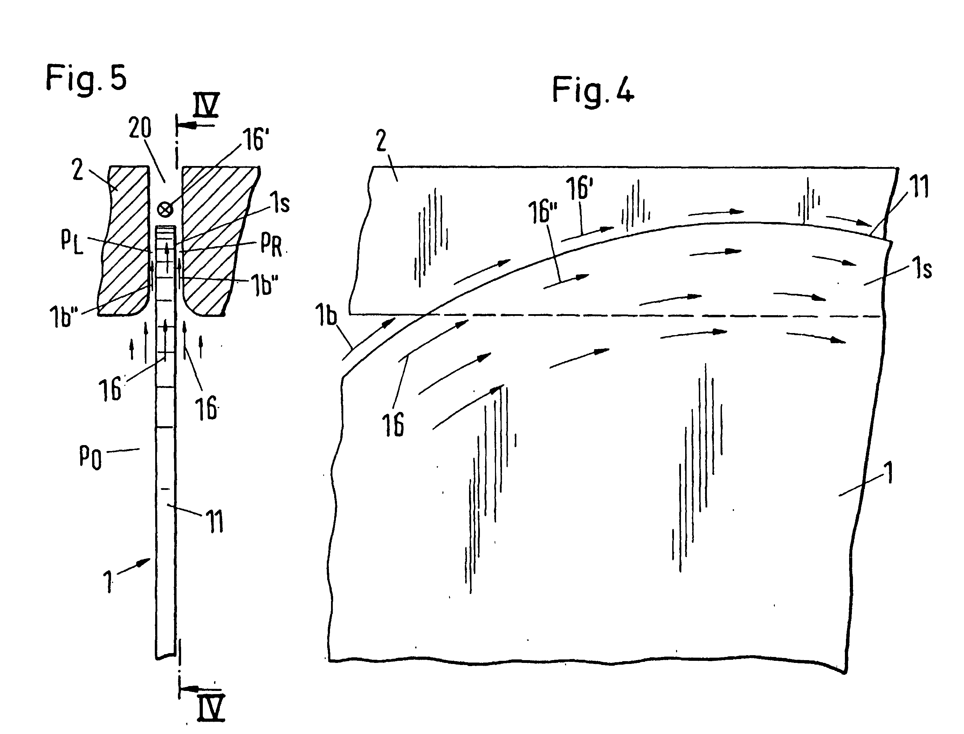

Im Führungsspalt 20 - siehe Figuren 4 und 5 - wird die Trennfolie 1 an der Peripherie 11 im Bereich eines segmentförmigen Teils 1s berührungslos auf Luftschichten zwischen den Flanken des Spalts 20 und den Oberflächen des Teils 1s geführt. Es wird eine Breite des Spalts 20 gewählt, die rund 0.1 bis 0.5 mm, vorzugsweise 0.15 bis 0.25 mm grösser als die Dicke der Trennfolie 1 ist. Pfeile 16, 16' und 16" stellen die Luft dar, die von der Oberfläche der rotierenden Folie 1 mitgerissen wird. Die Luftströmung wird im Spalt 2 stark abgebremst. Es entstehen Dücke p_{L} und p_{R} im Bereich des segmentförmigen Teils 1s, die grösser als der Umgebungsdruck p₀ sind. Auf der Seite des segmentförmigen Teils 1s, auf der die Luftschicht schmaler ist, ergibt sich eine grössere Abbremsung der mitgeführten Luftströmung, die mit einem grösseren Druckanstieg verbunden ist (Fig. 5: p_{L} > p_{R}). Durch die so entstehenden Druckdifferenzen zwischen den seitlichen Luftschichten des segmentförmigen Teils 1s ergibt sich eine Zentrierung der Folie 1 im Spalt 20 und somit eine berührungsfreie Führung durch diesen Spalt 20.

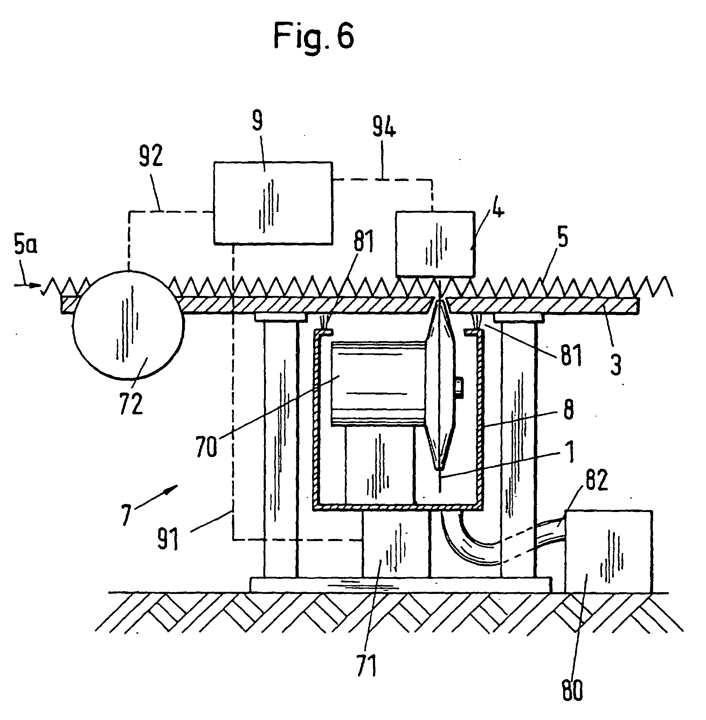

Die in Fig. 6 dargestellte Anlage 7 umfasst folgende Komponenten: einen Antriebsmotor 70 für die Trennfolie 5; einen mit dem Antrieb 70 verbundenen Linearmotor 71, mit dem die Relativbewegung 1b - siehe Fig. 1 - ausführbar ist; eine Klemmeinrichtung 4 für die profilierte Folie 5, mit der diese während des Zerteilens fixierbar ist; eine Fördervorrichtung 72 für die profilierte Folie (Förderung in Richtung des Pfeils 5a); ferner eine Steuereinrichtung 9 für einen automatischen Betrieb der Anlage 7.

Die Klemmeinrichtung 4 enthält einen nicht dargestellten Linearmotor für eine Hubbewegung, mit der ein Zustandswechsel der Klemmeinrichtung zwischen einem offenen und einem geschlossenen Zustand herstellbar ist. Sie enthält auch die Führungseinrichtung 2 (siehe Fig. 2). Die Steuereinrichtung 9 ist über Steuerleitungen 91, 92 und 94 mit den Komponenten 71, 72 bzw. 4 verbunden.

Die Trennfolie 1 ist zusammen mit ihrem Antrieb 70 in einer Verschalung 8 angeordnet. Mit Vorteil ist eine Absaugeinrichtung 80 für abgeriebenes Material über einen Schlauch 82 an der Verschalung 8 angeschlossen. Es ist eine Abdichtung der Verschalung 8 in Form von Bürsten 81 vorgesehen.

Das erfindungsgemässe Verfahren ist besonders geeignet, um eine profilierte Folie 5 zu zerteilen, die durch eine Umformung aus einem planen, metallischen Materialstreifen hergestellt ist, wobei Kammlinien 52 der Profilierung auf zwei zueinander parallelen Ebenen 53a und 53b - siehe Fig. 1 - angeordnet sind.

## Patentansprüche

1. Verfahren zum Zerteilen einer profilierten Folie (5) mit einer rotierenden Trennfolie (1), die eine ebene Fläche mit kreisförmiger Peripherie (11) und einem Kreiszentrum bildet, welche Trennfolie um das Kreiszentrum (10) und in der durch die ebene Fläche aufgespannten Ebene (10a), der Folienebene, rotiert wird (1a), wobei unter Ausführen einer Relativbewegung (1b) die Peripherie mit der profilierten Folie in Kontakt (15) gebracht wird, derart, dass durch Abreiben Material (6) abgetragen und ein Trennspalt (51) in der profilierten Folie erzeugt wird und Material weitgehend nur von der profilierten Folie abgetragen wird.

2. Verfahren nach Anspruch 1, **dadurch gekennzeichnet, dass** die profilierte Folie (5) und die Trennfolie (1) aus metallischen Legierungen bestehen und die Dicke der Trennfolie (1) grösser als jene der profilierten Folie (5) gewählt wird.

3. Verfahren nach Anspruch 1 oder 2, **dadurch gekennzeichnet, dass** die profilierte Folie (5) beim Zerteilen in einer Klemmeinrichtung (4, 40) fixiert wird und die rotierende Trennfolie (1) in der Folienebene (10a) translatorisch bewegt (1b) wird.

4. Verfahren nach einem der Ansprüche 1 bis 3, **dadurch gekennzeichnet, dass** die Trennfolie (1) an der Peripherie (11, 1s) in einem Führungspalt (2) berührungslos auf Luftschichten geführt wird, wobei eine Spaltbreite gewählt wird, die rund 0.1 bis 0.5 mm, vorzugsweise 0.15 bis 0.25 mm grösser als die Dicke der Trennfolie ist.

5. Verfahren nach einem der Ansprüche 1 bis 4, **dadurch gekennzeichnet, dass** für den Radius der Trennfolie (1) ein Wert zwischen 100 und 500 mm gewählt wird und dass die Rotation (1a) der Trennfolie empirisch auf die Wahl der Materialien abgestimmt wird, so dass die Oberflächenpunkte der Peripherie (11) sich mit einer ausreichend hohen Geschwindigkeit (v) bewegen, für die einerseits ein scharfkantiger Trennspalt (51) in der profilierten Folie (5) entsteht und andererseits ein minimaler Materialabtrag sich an der Trennfolie (1) ergibt, wobei erfahrungsgemäss bei einer Trennfolie (1) und einer profilierten Folie (5), die metallisch sind und die Dicken von 0.3 mm bzw. 0.1 mm aufweisen, die Peripheriegeschwindigkeit (v) grösser als rund 50 m/s ist.

6. Verfahren gemäss einem der Ansprüche 1 bis 5, **dadurch gekennzeichnet, dass** die profilierte Folie (5) durch eine Umformung aus einem planen Materialstreifen hergestellt ist und dass Kammlinien (52) der Profilierung auf zwei zueinander parallelen Ebenen (53a, 53b) liegen.

7. Anlage (7) zum Durchführen des Verfahrens gemäss einem der Ansprüche 1 bis 5, **gekennzeichnet durch** einen Antrieb (70) für die Trennfolie (1), insbesondere einen Asynchronmotor;
einen mit dem Antrieb verbundenen Linearmotor, mit dem die Relativbewegung (1b) zwischen den beiden Folien (1, 5) ausführbar ist;
eine Klemmeinrichtung (4) für die profilierte Folie (5), mit der diese Folie während des Zerteilens fixierbar ist;
einen Linearmotor für eine Hubbewegung, mit der ein Zustandswechsel der Klemmeinrichtung (4) zwischen einem offenen und einem geschlossenen Zustand herstellbar ist;
einen Führungspalt (20) für die Trennfolie (1), der Teil der Klemmeinrichtung (4) ist;
eine Fördervorrichtung (72) für die profilierte Folie (5); ferner eine Steuereinrichtung (9) für einen automatischen Betrieb der Anlage (7).

8. Anlage nach Anspruch 7, **dadurch gekennzeichnet, dass** ausserhalb der Klemmeinrichtung (4) eine Wartestellung für die Trennfolie (1) vorgesehen ist und dass mindestens ein Ende (21) des Führungspalts (20) mit einer sich stetig erweiternden Spaltbreite ausgebildet ist, so dass dank dieser Formgebung die Trennfolie weitgehend berührungslos in den Führungspalt eintreten kann.

9. Anlage nach Anspruch 7 oder 8, **dadurch gekennzeichnet, dass** die Trennfolie (1) zwischen zwei Einspanntellern (12a, 12b) lösbar befestigt ist, wobei der eine Einspannteller (12a) mit einer Antriebswelle fest verbunden ist und der andere Einspannteller (12b) zum Auswechseln der Trennfolie entfernbar ist.

10. Anlage nach einem der Ansprüche 7 bis 9, **dadurch gekennzeichnet, dass** die Trennfolie (1) zusammen mit ihrem Antrieb (70) in einer Verschalung (8) angeordnet ist, wobei eine Abdichtung (81) der Verschalung vorgesehen ist, die insbesondere durch Bürsten hergestellt ist, und dass mit Vorteil eine Absaugeinrichtung (80) für abgeriebenes Material (6, 6') an der Verschalung angeschlossen ist.

## Claims

1. A method for dividing up a profiled foil (5) with a rotating separating foil (1) which forms a planar surface with a circular periphery (11) and a circle centre, said parting foil being rotated (1a) about the circle center (10) and in the plane (10a), the foil plane, which is spanned by the planar surface, with the periphery being brought into contact (15) with the profiled foil by the execution of a relative movement (1b) in such a manner that material (6) is removed by abrasion and a partition gap (51) is produced in the profiled foil and material is largely removed from the profiled foil only.

2. A method in accordance with claim 1, **characterized in that** the profiled foil (5) and the parting foil (1) consist of metallic alloys and the thickness of the parting foil (1) is chosen to be greater than that of the profiled foil (5).

3. A method in accordance with claim 1 or claim 2, **characterized in that** the profiled foil (5) is fixed in a clamping device (4, 40) during the dividing up and the rotating parting foil (1) is moved in the foil plane (10a) in a translatory manner.

4. A method in accordance with any one of the claims 1 to 3, **characterized in that** the parting foil (1) is guided at its periphery (11, 1s) without contact on air layers in a guiding gap (2), with a gap width being chosen which is about 0.1 to 0.5 mm, preferably 0.15 to 0.25 mm greater than the thickness of the parting foil.

5. A method in accordance with any one of the claims 1 to 4, **characterized in that** a value between 100 and 500 mm is chosen for the radius of the parting foil (1); and **in that** the rotation (1a) of the parting foil is empirically matched to the choice of the materials so that the surface points of the periphery (11) move with a sufficiently high velocity (v), for which, on the one hand, a sharp edged partition gap (51) arises in the profiled foil (5) and, on the other hand, a minimum material removal results at the parting foil (1), with in accordance with experience the peripheral velocity (v) being greater than about 50 m/s for a parting foil (1) and a profiled foil (5) which are metallic and which have thicknesses of 0.3 mm and 0.1 mm respectively.

6. A method in accordance with any one of the claims 1 to 5, **characterized in that** the profiled foil (5) is manufactured by forming from a planar material strip; and **in that** ridge lines (52) of the profile lie on two mutually parallel planes (53a, 53b).

7. An apparatus (7) for carrying out the method in accordance with any one of the claims 1 to 5, comprising the following components:
a drive (70) for the parting foil (1), in particular an asynchronous motor;
a linear motor which is connected to the drive and by means of which the relative movement (1b) between the two foils (1, 5) can be accomplished;
a clamping device (4) for the profiled foil (5) by means of which this foil can be fixed during the dividing up;
a linear motor for a lifting movement by means of which a change of state of the clamping device (4) between an open state and a closed state can be produced;
a guiding gap (20) for the parting foil (1) which is part of the clamping device (4);
a conveying device (72) for the profiled foil (5); furthermore a control device (9) for an automatic operation of the apparatus (7).

8. An apparatus in accordance with claim 7, **characterized in that** a waiting position for the parting foil (1) is provided outside the clamping device (4); and **in that** at least one end (21) of the guiding gap (20) is formed with a continuously widening gap width so that due to this shape the parting foil can enter into the guiding gap largely without contact.

9. An apparatus in accordance with claim 7 or claim 8, **characterized in that** the parting foil (1) is releasably secured between two clamping plates (12a, 12b), with the one clamping plate (12a) being firmly connected to a drive shaft and the other clamping plate (12b) being removable for replacing the parting foil.

10. An apparatus in accordance with any one of the claims 7 to 9, **characterized in that** the parting foil (1) is arranged together with its drive (70) in a casing (8), with a sealing (81) of the casing being provided which is in particular produced through brushes; and **in that** a suction device (80) for abraded material (6, 6') is advantageously connected to the casing.

## Revendications

1. Procédé de découpage d'une feuille profilée (5) avec une feuille de séparation tournante (1) qui forme une face plane avec une périphérie circulaire (11) et un centre de cercle, ladite feuille de séparation est amenée à tourner (1a) autour du centre de cercle (10) et dans le plan (10a) formé par la face plane, où en effectuant un mouvement relatif (1b), la périphérie est amenée en contact (15) avec la feuille profilée de telle sorte que par frottement, du matériau (6) est enlevé et une fente de séparation (51) est produite dans la feuille profilée, et le matériau est enlevé dans une grande mesure seulement de la feuille profilée.

2. Procédé selon la revendication 1, **caractérisé en ce que** la feuille profilée (5) et la feuille de séparation (1) sont réalisées en des alliages métalliques et **en ce que** l'épaisseur de la feuille de séparation (1) est sélectionnée pour être plus grande que celle de la feuille profilée (5).

3. Procédé selon la revendication 1 ou 2, **caractérisé en ce que** la feuille profilée (5), lors du découpage, est fixée dans une installation de serrage (4,40), et **en ce que** la feuille de séparation tournante (1) est déplacée selon un mouvement de translation (1b) dans le plan de feuille (10a).

4. Procédé selon l'une des revendications 1 à 3, **caractérisé en ce que** la feuille de séparation (1) est guidée à la périphérie (11,1s) dans une fente de guidage (2) sans contact sur des couches d'air, où une largeur de fente est sélectionnée qui est environ de 0,1 à 0,5 mm, de préférence de 0,15 à 0,25 mm plus grande que l'épaisseur de la feuille de séparation.

5. Procédé selon l'une des revendications 1 à 4, **caractérisé en ce que** pour le rayon de la feuille de séparation (1), une valeur entre 100 et 500 mm est sélectionnée, et que la rotation (1a) de la feuille de séparation est accordée empiriquement au choix des matériaux, de sorte que les points de surface de la périphérie (11) se déplacent à une vitesse (v) suffisamment élevée, à laquelle se produit, d'une part, une fente de séparation à arêtes tranchantes (51) dans la feuille profilée (5) et, d'autre part, un enlèvement minimal de matériau par frottement se produit à la feuille de séparation (1), où empiriquement, dans le cas d'une feuille de séparation (1) et d'une feuille profilée (5), qui sont métalliques et qui ont des épaisseurs de 0,3 mm respectivement 0,1 mm, la vitesse périphérique (v) est plus grande qu'environ 50 m/s.

6. Procédé selon l'une des revendications 1 à 5, **caractérisé en ce que** la feuille profilée (5) est réalisée par une déformation à partir d'une bande de matériau plane, et **en ce que** des lignes de crête (52) du profilage se situent sur deux plans parallèles l'un à l'autre (53a, 53b).

7. Installation (7) pour l'exécution du procédé selon l'une des revendications 1 à 5, **caractérisé par** :
un entraînement (70) pour la feuille de séparation (1), en particulier un moteur asynchrone;
un moteur linéaire relié à l'entraînement, au moyen duquel peut être exécuté le déplacement relatif (1b) entre les deux feuilles (1,5) ;
une installation de serrage (4) de la feuille profilée (5) au moyen de laquelle cette feuille peut être fixée pendant le découpage;
un moteur linéaire pour un mouvement de course au moyen duquel un changement d'état de l'installation de serrage (4) peut être réalisé entre un état ouvert et un état fermé;
une fente de guidage (20) de la feuille de séparation (1) qui constitue une partie de l'installation de serrage (4) ;
un dispositif de convoyage (72) de la feuille profilée (5) ; en outre
une installation de commande (9) pour un fonctionnement automatique de l'installation (7)

8. Installation selon la revendication 7, **caractérisée en ce qu'**il est prévu à l'extérieur de l'installation de serrage (4) une position d'attente de la feuille de séparation (1) et **en ce qu'**au moins une extrémité (21) de la fente de guidage (20) est réalisée en une largeur de fente augmentant régulièrement de sorte que grâce à cette configuration, la feuille de séparation peut entrer dans une grande mesure sans contact dans la fente de guidage.

9. Installation selon la revendication 7 ou 8, **caractérisée en ce que** la feuille de séparation (1) est fixée relâchablement entre deux plateaux de serrage (12a, 12b), où un plateau de serrage (12a) est relié solidement à un arbre d'entraînement, et l'autre plateau de serrage (12b) peut être retiré pour changer la feuille de séparation.

10. Installation selon l'une des revendications 7 à 9, **caractérisée en ce que** la feuille de séparation (1), conjointement avec son entraînement (70) est disposée dans un coffrage (8), où un joint d'étanchéité (81) du coffrage est prévu, qui est réalisé en particulier par des brosses, et **en ce qu'**une installation d'aspiration (80) du matériau enlevé par frottement (6,6') est raccordée avantageusement au coffrage.
